# EUROPEAN PATENT APPLICATION

(11) **EP 2 202 936 A1**
(43) Date of publication of application: **30.06.2010**
(21) Application number: 08306014.5
(22) Date of filing: 24.12.2008
(51) Int. Cl.: H04L 29/06

(54) **System, device and method for providing personalized communication services to users**

(71) Applicant: FRANCE TELECOM, 75015 Paris (FR)
(72) Inventor: Jain, Menuka, Edgware, HA86PF (GB); Prokopi, Maria, LONDON, W45XS (GB)
(74) Representative: Cabinet Plasseraud

(57) **Abstract**

System for providing personalized communication services to users, comprising service controllers (11) arranged for handling respective sets of prime services, at least one of said sets including more than one prime service, databases (13) including a user profile database (HSdb) relating to said users, a service database (sub) relating to said prime services and a logic database (UL,SL) relating to personalized services, and a service management controlled (10) arranged for: interacting with said service controllers and said databases ; selectively allowing, by interacting with at least some of said databases, creation of a personalized service based on at least some of said prime services and defined with respect to a group of at least one user ; and, after having allowed creation of said personalized service, saving in said logic database an indication of an order of the prime services on which said personalized service is based.

## Description

The present invention relates to provision of personalized communication services.

It is known to provide users with communication services through a telecommunications network or system.

As a non-limiting example, an IP (Internet Protocol) based architecture, called IMS (IP Multimedia Subsystem), has been developed by the 3GPP organization for delivering multimedia services to users.

In IMS, when a user equipment UE registers with a session controller S-CSCF (Serving-Call Session Control Function), a service profile for the user of that UE is transmitted from a user database HSS (Home Subscriber Server) to the S-CSCF.

The service profile of the user defines the set of prime services that user can be provided with through the IMS system. It takes the form of a list of so-called initial filter criteria (IFC), each consisting in the association of a service trigger point (STP), i.e. a logical expression matching a message, and an application server (AS) capable of performing one prime service and to invoke when the associated trigger point matches with an incoming/outgoing message.

Then, on arrival of an incoming message, the S-CSCF examines the filter criteria obtained from the HSS in descending order of priority and checks whether any trigger point matches the incoming message. If there is match, the message is sent to the corresponding application server AS. On receiving back the message from the AS, the S-CSCF evaluates the next filter criteria and, when there is a match, sends the message to the corresponding application server AS, etc. This process continues until there is no more match with remaining filter criteria.

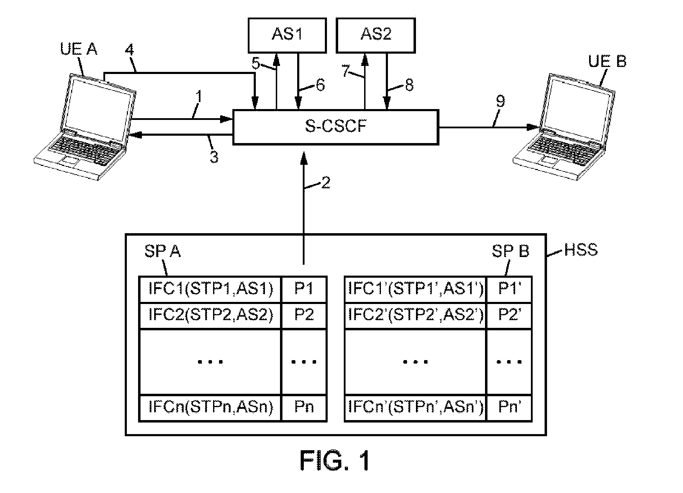

This is illustrated in FIG.1. In this example, the UE A first sends a REGISTER message 1 to the S-CSCF. As a result, the S-CSCF gets the service profile SP A of the corresponding user A which is stored in the HSS (message 2). SP A contains a list of filter criteria IFC1 to IFCn, each designating associated STPs and ASs, ranked in descending order of priority P1 to Pn. The S-CSCF can then acknowledge registration of UE A by sending it an OK message 3.

When a SIP (Session Initiation Protocol) message 4 is transmitted from the UE A to the S-CSFC, the latter checks whether the trigger point STP1 of IFC1 having the highest priority matches the incoming message. If it does, the message is forwarded to the application server AS1 associated with STP1 in IFC1 (message 5). AS1 can thus perform its prime service and return the received message to the S-CSCF (message 6).

The S-CSCF then evaluates the next filter criteria STP2, and if there is a match forwards the message to AS2 (message 7) which performs its prime service and returns the received message to the S-CSCF (message 8).

When no more matches can be found with any trigger point of SP A, the message is finally forwarded to UE B (message 9).

There are several disadvantages however in the above mentioned approach.

In particular, although the service profile of a given user can include several IFCs, the user is bound nevertheless by the corresponding sequence of prime services which was pre-defined by the service provider. Such prime services are generally in a very limited number and may not correspond to the user's needs.

An object of the present invention is thus to increase flexibility in providing communication services to users.

The invention proposes a system for providing personalized communication services to users. The system comprises service controllers arranged for handling respective sets of prime services, at least one of said sets including more than one prime service, databases including a user profile database relating to said users, a service database relating to said prime services and a logic database relating to personalized services, and a service management controller arranged for interacting with said service controllers and said databases. The service management controller is further arranged for:
- selectively allowing, by interacting with at least some of said databases, creation of a personalized service based on at least some of said prime services and defined with respect to a group of at least one user, and
- after having allowed creation of said personalized service, saving in said logic database an indication of an order of the prime services on which said personalized service is based.

Due to this architecture and in particular to the role played by the service management controller, personalized communication services can be defined based on user's needs. This user logic can then be applied by using the saved service logic.

Note that the prime services may be distributed across the network.

The invention also proposes a service management controller for use in a system as mentioned above. The service management controller is arranged for :
- interacting with said service controllers and said databases ;
- selectively allowing, by interacting with at least some of said databases, creation of a personalized service based on at least some of said prime services and defined with respect to a group of at least one user, and
- after having allowed creation of said personalized service, saving in said logic database an indication of an order of the prime services on which said personalized service is based.

The invention also proposes a method for providing personalized communication services to users in a system as mentioned above. The method comprises the following steps carried out by the service management controller :
- selectively allowing, by interacting with at least some of said databases, creation of a personalized service based on at least some of said prime services and defined with respect to a group of at least one user, and
- after having allowed creation of said personalized service, saving in said logic database an indication of an order of the prime services on which said personalized service is based.

The preferred features of the above aspects which are indicated by the dependent claims may be combined as appropriate, and may be combined with any of the above aspects of the invention, as would be apparent to a person skilled in the art.
- FIG.1, already discussed, shows a service implementation in an IMS network according to prior art ;
- FIG.2 shows an exemplary system according to the invention;
- FIG.3 shows an exemplary embodiment of a validation stage;
- FIG.4 shows an example for personalized service definition;
- FIG.5 shows an exemplary embodiment of a service interaction management stage ;
- FIG.6 shows an advantageous example of database management that can take place in a system according to the invention.

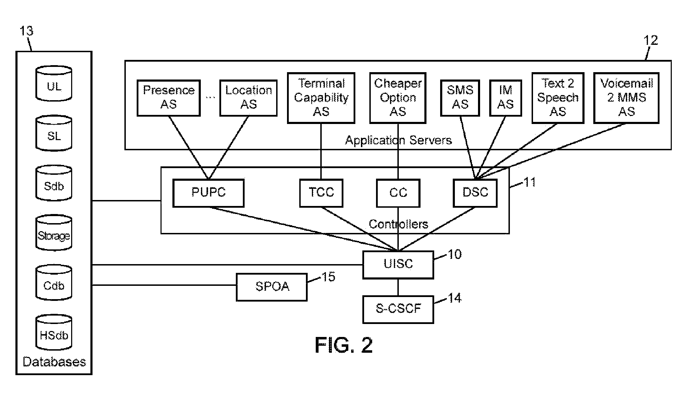

FIG.2 shows a non-limiting example of a system according to the invention. In this example, the system is inserted in an IMS (IP Multimedia Subsystem) network, but it should be noted that any other type of networks, architectures and technologies would be suitable as well, such as Web, PSTN (public switched telephone network), etc.

The system of FIG.2 comprises service controllers 11 each handling respective sets of prime services. In this way, each service controller offers an integrated service making use of a number of prime services, in conjunction with the service logic stored in a database which will be detailed later.

Advantageously, the different prime services are grouped and every service Controller deals with a set of prime services of similar characteristics (i.e. messaging related prime services such as SMS (Short Message Service), IM (Instant messaging), voice mail). The controllers thus use centralised controlling functionalities.

Possibly, each prime service is performed by a respective application server AS 12 which can be activated by the corresponding managing service controller. At least one of the service controllers (e.g. the PUPC in FIG.2) can handle multiple ASs, and thus more than one prime service.

This advantageous approach allows for easier/simpler population of the different groups with more ASs, in order to increase the number of available prime services.

The exemplary system of FIG.2 includes four different service controllers 11, namely :
- Personal User Preferences Controller (PUPC): It takes care of user preferences, presence (in cooperation with a presence AS), location (in cooperation with a location AS), user contact details, preferences of user contact details. For this purpose, it interfaces with the user logic database and service database which will be detailed later, so as to communicate with various services like presence, and location services. This service controller may help saving the service logic in the logic database.
- Terminal Capability services Contoller (TCC): It would determine (in cooperation with a terminal capability AS) the capabilities of terminals across various platforms like mobile world, Web world and the fixed access, PSTN world, etc.
- Charging Controller (CC): CC would be responsible for determining charging options, such as the cheapest option of delivery mechanism based on user's preference list (in cooperation with the cheaper option AS).
- Delivery Services Controller (DSC): DSC is in charge of delivering various services like SMS, MMS, IM, Voice call, Video call, Chat message, Call Forwarding, Voice mail, conferencing, POC as well as conversion services, in cooperation with respective ASs. It talks with a service database to interact with the relevant service. If message needs to be converted it would interact with Media Server for Text to Speech, ASR, Speech and other voice related servers.

Possible functions for each of those service controllers are further detailed herein after.
- PUPC
   ○ Dynamic Application: Manages AS those are updated frequently for a user. For example, presence, location. Dynamic Enablers/Applicabon are the ones that frequently change and require updates to be sent. Static Enablers that can be invoked but does not require regular updates. Dynamic Enablers are put into the PUPC and static enablers are categorized into TCC, charging, and delivery mechanism
   ○ Publish: All services managed by PUPC, publish themselves to PUPC. This includes service invocation which is stored in storage database.
   ○ Creation of Service Logic: Service logic is created based on service publication and user logic. Some of service logic may be pushed to HSS. In the scenario, service logic is pushed to HSS, that particular controller plays not part.
   ○ User logic and PUPC working: Based on user logic, PUPC may need to be aware of user dynamic detail and take appropriate action. In order to do this, PUPC updates service logic database to get third party registration. UISC on getting party registration notification from the S-CSCF, informs the PUPC. In third party registration, PUPC invokes subscription to the service as required by user.
   ○ PUPC creates service logic i.e. action for each service result based on user logic.
- Terminal Capability Controller
   ○ It would determine the capabilities of terminals across various platforms like mobile world, Web world and the fixed access, PSTN world.
   ○ It updates the service logic with terminal capabilities information if required by the user logic.
   ○ There can be one to one mapping between TCC and home network Terminal Capability AS. It can accommodate third party terminal capability application server for converged service.
- Charging Controller
   ○ Charging Logic Published: All the services need to publish their charging enabler to charging controller.
   ○ Composite charging: Charging Controller would ensure that the composite charging is taken care by charging controller. That means if multiple services are being used, it would ensure the composite charging. For example, if user is using presence, SMS, the charging controller would determine the combined cost to the user and charge accordingly. This would be based on total cost of using the service as well as the user profile i.e. enterprise user, residential user.
   ○ Cheapest one: It would also ensure that out of various services, which service combination would be cheapest one if required by user logic. This would be stored in service database.
   ○ Service quote: Upon validation of the user logic by the UISC, charging controller provides a quote for the service logic created.
   ○ Monitoring and recommending new charging enabler: There could be different charging schemes which could be available to user. User may be subscribed to particular charging scheme. If required by user, charging enabler can monitor account usage and recommend alternative charging schemes which may be more economical to user.
- Delivery Controller
   ○ Retrieve content: Delivery Controller could act as B2BUA and retrieve content from multiple AS such as voice mail server.
   ○ Session Control - Delivery Controller would perform session control if required by the service. This may involve controlling the call by invoking relevant AS or user.
   ○ Conversion - Delivery Controller would perform conversion if required by user logic or by FISC. This is indicated in the service logic database. Example of conversion service is Text to Speech, Speech Recognition feature.
   ○ Deliver: Delivery Controller would retrieve the terminal to which delivery controller needs to send information. The contact information of terminal is retrieved from HSS. It is responsible for sending information to appropriate terminal/client as specified by user.

Note that the above mentioned service controllers are just examples and many other service controllers may be used instead or in addition to them.

The system of FIG.2 also comprises various databases 13. Those databases include:
- A user profile database HSdb: This entity can be any type of static database located in the home network such as HSS (Home Subscriber Server, especially in the context of IMS), HLR (Home Location Register), etc., holding information about users and possibly location information.
- A service database Sdb: It relates to the prime services. It hosts service information and is accessed by the single point of access SPOA and the service controllers. The service controllers access the service database so as to retrieve information on how to contact various types of services.
- A logic database: It contains data relating to personalized services. It may consist in a single database. Alternatively, it may comprise two different parts relating to the user logic and the service logic respectively. In the following, it is assumed that separate user logic UL and service logic SL databases are used.
   ○ The user logic is advantageously created by users themselves via the single point of access SPOA 15 and holds their personal preferences for service creation. That may be dependent e.g. on the user's location, presence, contact preferences, different service logic for user's contact. User logic database may be accessed by the personal user preferences controller PUPC and the UISC that will be detailed later.
   ○ The service logic holds the order in which various services are invoked for a particular user or group of users. It may be accessed by the UISC and the service controllers. Service logic may evolve over a period of time.

As shown in FIG.2, some other databases 13 may be used, such as :
- A storage database: It holds user personal data, and service data. Delivery Service Controller DSC can access storage database based on user/service requirements.
- A charging database Cdb: It contains charging information for various services and different types of QoS (quality of service). Charging database may be accessed by the charging controller CC.

Note that other databases may be used instead or in addition.

Some of the service controllers 11 may interact with some of the databases 13, especially for getting information about service execution, as well as for updating the databases with information about new ASs added in their set or any AS service information upgrades performed. Some databases are accessed by one specific controller only, e.g. the charging database Cdb, whilst others interact with more than one controller, e.g. the user logic UL and service logic SL databases.

The system further comprises a service management controller 10 arranged for interacting with the service controllers 11 and the databases 13. It is called UISC (for User Intelligent Service Controller) in FIG.2 and in the following.

UISC 10 is the centralised point of management for the service controllers 11. The service controllers 11 may be unaware of the UISC functionality. UISC views the service controllers 11 as ASs assisting, in conjunction with the databases 13, with its service personalization logic and service interaction management functions. When used in an IMS network, UISC can either be part of an S-CSCF or a separate entity sitting between a S-CSCF 14 and the controllers as shown in FIG.2.

UISC may act as a B2BUA (Back-to-Back User Agent) and invoke various services in order to create a service as per user's requirements. It may be responsible for at least some of the following functions:
- Interfacing with various service controllers in order to create service logic or to deliver the service appropriately.
- Creating service logic either statically or dynamically based on the service requirements. Based on personal preferences controller, it determines whether static or dynamic service logic is to be created. It then stores it in the service logic database by the UISC.
- Determining whether UISC needs to be involved.
- Creating Filter Criteria based on the service logic.
- HSS triggering: filter criteria might be downloaded to the HSS, if UISC involvement is not required.

UISC is arranged for selectively allowing, by interacting with at least some of the databases 13, creation of a personalized service based on at least some of the prime services and defined with respect to a group of at least one user. Besides, after having allowed creation of a personalized service, UISC can save in the logic database an indication of an order of the prime services on which said personalized service is based. This function can be seen as service personalization.

During service personalization, UISC may therefore validate a user generated logic, by checking the information held in the service logic and service databases, as well as the user profile permissions on the HSS.

Furthermore, the UISC may compare the generated logic to existing user logic stored in the user logic database by or for other users. In the scenario that the same service logic already exists, the UISC may discard the new entry.

Once validation stage is completed the UISC may advantageously update the IFC (initial filter criteria) for the user on the HSS, to add trigger points for the new service logic.

In the scenario that the same service logic already exists, the UISC may update the IFG for the user on the HSS, to add trigger points for the already existing service logic.

Advantageously, only the static logics should be pushed to the HSS, as they do not require performance by the UISC. In contrast, there is no need to push the dynamic logics to the HSS as they are performed by the UISC.

A service logic is said static when the HSS can perform it completely by using appropriate trigger points, with no interaction with the UISC. In contrast, a dynamic logic cannot be performed by using trigger points but needs some level of interaction by the UISC. A dynamic logic would also be executed on run-time.

When creating a personalized service, the UISC can check and decide whether the corresponding service logic is static or dynamic, and push it to the HSS only in case it is static.

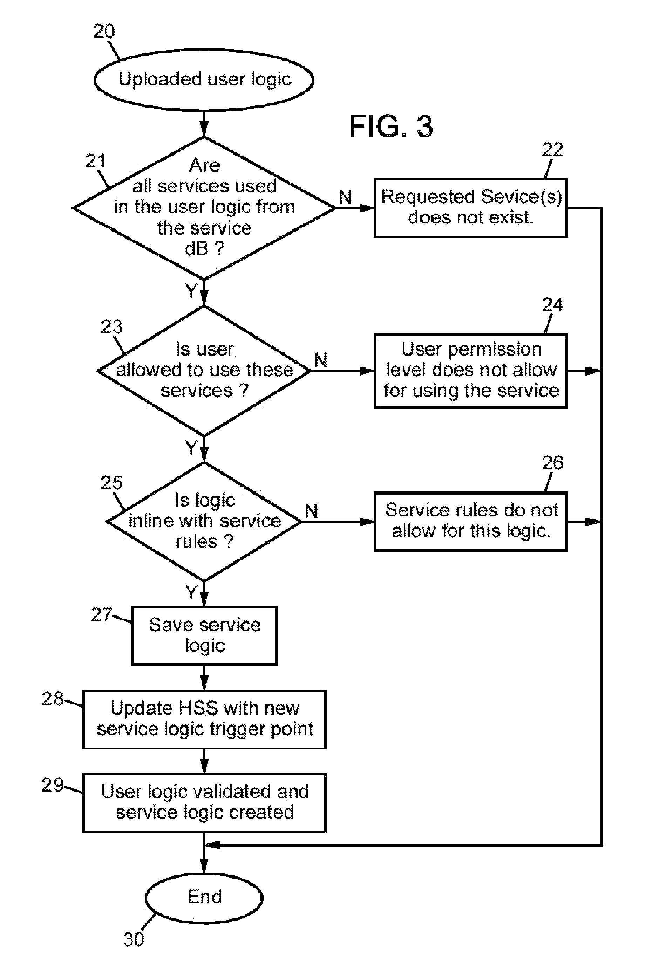

FIG.3 shows an exemplary embodiment of a validation stage. This validation takes place after a personalized service based on at least some of said prime services has been defined with respect to a group of at least one user (i.e. for or by one user of a group of several users).

For a system having the architecture shown in FIG.2, the personalized service may be defined with the SPOA 15 based on user preferences and service requirements and be stored in the user logic database UL. This user logic (or personalized service) creation can advantageously use selection among a plurality of options through appropriate menus.

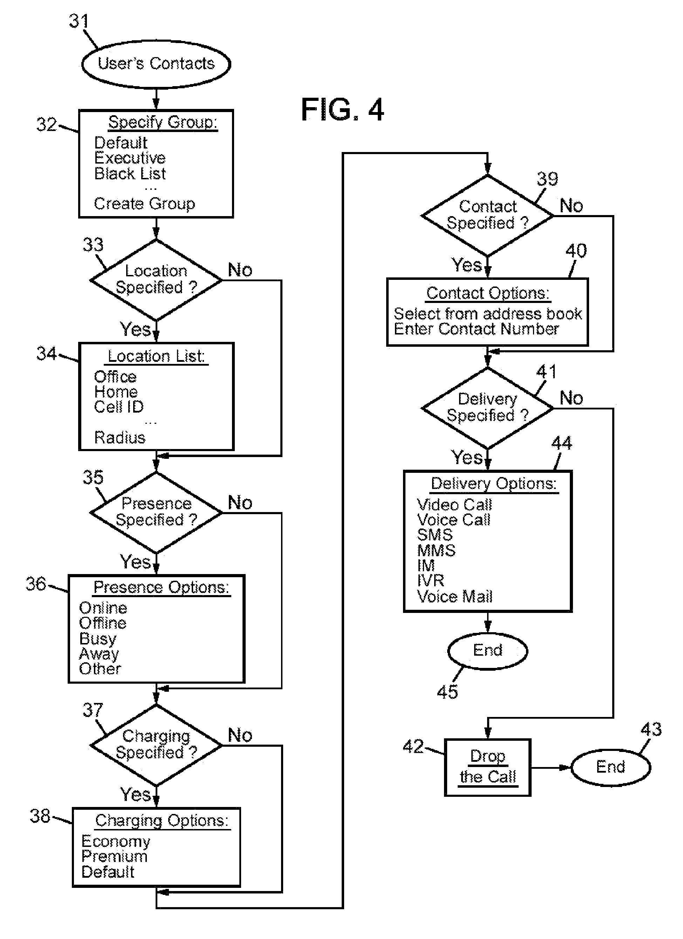

An example for personalized service definition is shown in FIG.4 for illustration purposes only. In this example, a user is shown his contacts from his address book (step 31) and, for each contacts, he can specify the preferred group either by selecting one of the predefined options (default, executive, black list) or creating new group (step 32).

After receiving contact choice, the user fills various options for terminating messages/calls for that contact group.

The user is asked whether his location is required for the personalized service (step 33). If yes, the user can specify different locations and their radius from a Graphical User Interface (GUI) (step 34).

After getting the location input, the user is asked whether his presence is required for the personalized service (step 35). If yes, the user can specify the presence settings for which the service logic needs to be executed (step 36).

If the user has not specified Presence and Location information, it is assumed that it is static logic. Static logic can be created by the UISC and pushed to HSS as IFC. Once the IFC is pushed to the HSS, the UISC may no longer be involved in the service invocation.

The user can choose whether he requires premium, economy, or default form of charging (steps 37 and 38).

After choosing all the options, the user needs to specify the action required for that messages/calls. The action could be that calls should be sent to colleague. If the user chooses this action, he would select from contacts of his address book (steps 39 and 40).

After carrying out all steps above, the user chooses delivery options i.e. voice, video call, SMS, MMS, IM, IVR and voice mail (steps 41 and 44). If no delivery option is chosen then the user has the option of dropping the call (step 42), or rejecting the call so as the call is barred and is included in user's black list.

At the end of this personalized service creation (step 43 or 45), the corresponding logic can be stored in the logic database, more particularly in the user logic database UL.

Back to FIG.3, the service personalization by the UISC may be achieved by interacting with at least some of the databases 13 (e.g. user logic, service logic, storage, charging, service and/or HS databases).

During that stage, validation of the user logic (i.e. the defined personalized service) is performed. In other words, it is checked whether creation of the user logic should be allowed or not.

In addition, and after creation of the user logic has been allowed, an indication of an order of the prime services on which said user logic (i.e. personalized service) is based is determined and saved in the logic database. Wits the architecture shown in FIG.2, this can be done by creating and storing a service logic in the service logic database SL.

The user logic, database is accessible by the users through the SPOA 15. Users can create and customize services by specifying the logic in the logic database. Once the logic is specified, the UISC validates the created user logic.

In the example of FIG.3, the considered user logic relates to a single user. But, it may alternatively relate to a group of several users.

As shown in the validation embodiment of FIG.3, after having retrieved the user logic (step 20), UISC checks against the service database if all prime services used in the user logic exists, i.e. whether data representing all prime services on which said personalized service is based are stored in the service database (step 21).

UISC also checks against the HSdb if the user has permission to use the selected prime services, i.e. whether the use of all prime services on which said personalized service is based is compatible with user profile data stored in HSdb in relation to the considered user (step 23).

UISC also checks against a set of rules specified in the service database if the user logic is executable, i.e. said personalized service is in line with service rules stored in the service database (step 25).

Note that other validation tests may be used instead or in addition to the ones mentioned above.

When all tests have been passed, UISC saves the service logic (i.e. an indication of the order of the prime services on which said personalized service is based) in the service logic database (step 27) and advantageously create a trigger on the HSS for that particular user (step 28), which ends the validation stage (step 30).

Advantageously, UISC may also carry out service interaction management after the validation stage has been successfully achieved. So, after having allowed creation of a personalized service, UISC may retrieve the order indication from the logic database and perform the personalized service with respect to at least one user of said group, by sequentially activating the service controllers handing the prime services on which said personalized service is based depending on said order indication.

To do so, the UISC may thus manage the service controllers based on the user logic, if specified. On receipt of an incoming/outgoing message, it may check the user profile on the S-CSCF and match the tigger points to the user's service logic.

UISC may then execute the user logic with the help of the service controller(s) responsible for the required set(s) of prime services. Each service controller may in turn query the service logic database for the execution of the UISC request.

After the first step of the service logic is executed by the respective service controller, UISC may proceed to the next step of the service logic and query another service controller for executing the step with the help of the available ASs in its set. Once again, the controller may query the service logic database and so on until the user logic is fully executed.

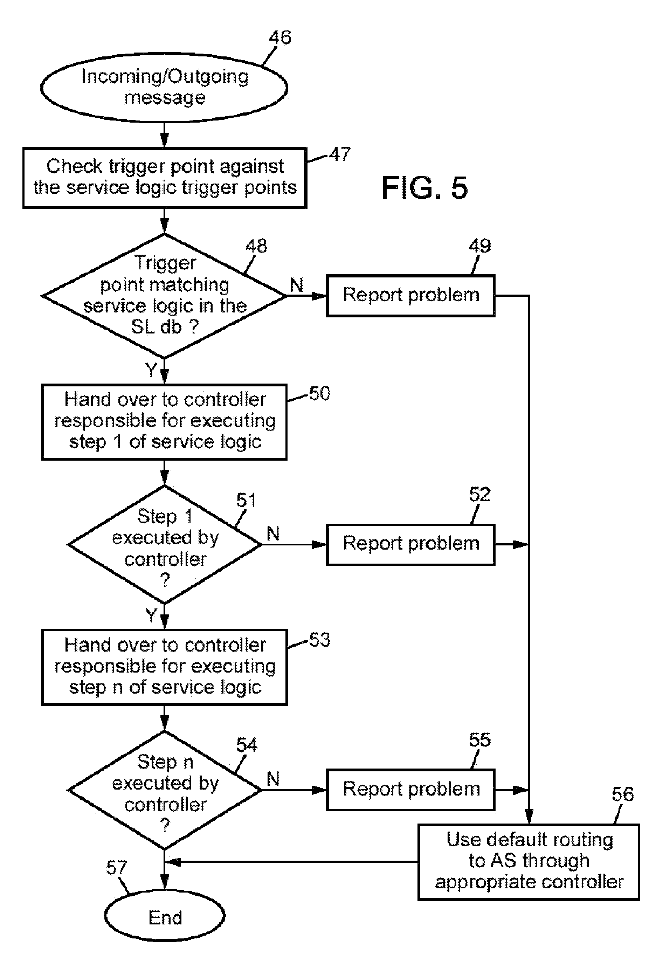

FIG.5 shows an exemplary embodiment of a service interaction management stage.

In this example, the service interaction management by FISC is achieved through the use of a set of service controllers and databases. The invoked service controllers advantageously manage the interaction amongst multiple ASs.

Upon matching the IFC trigger to the user logic (i.e. personalized service), UISC. executes the service logic which it has retrieved from the service logic database with the help of the service controllers.

As shown in FIG.5, on reception/transmission of an incoming/outgoing message (step 46), UISC checks for service logic that matches the trigger point in the SL database (step 47).

If there is no service logic matching the trigger point (steps 48, 49 and 56), a default route may be used and the FISC may forward the incoming/outgoing message to the appropriate service controller for routing to the suitable AS.

Upon finding a service logic matchíng the trigger, UISC executes each and every step of the service logic by contacting each and every appropriate service controller (steps 48 and 50). The service controllers in turn might need to contact the service database for instructions on how to execute the service for the requested step.

If for any reason the service controller does not execute the requested step, UISC reports the error and the default routing is used for the message (steps 52 and 56).

Upon execution of last step the UISC finishes with the process of handling the service logic (steps 53, 54 and 57).

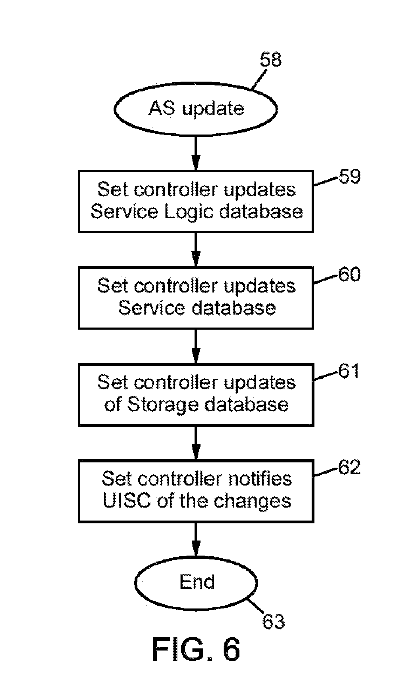

FIG.6 shows an advantageous example of database management that can take place in a system according to the invention.

According to this example, the service logic and service databases get updated by the service controllers of the different AS sets each time a new AS is added or an AS gets updated. After the databases get up to date, the UISC is notified of the new entries. UISG may execute the validation process for all the user logics stored in the UL database, ensuring the updation and correct functionality of the stored personalized user logics.

As shown in FIG.6, upon updating an AS set with new AS(s), the controller responsible for that set (the set controller) updates the appropriate databases with the appropriate changes (steps 59 to 61).

Once the set controller is finished with the updates of the databases, it notifies the UISC of the databases that got updated (step 62).

The UISC, knowing which databases have been updated, may validate once again the stored user logic(s) that is/are related to the updated database(s).

It will appear to one skilled in the art that systems according to the invention may have an architecture or a mode of operation a bit different from what was described so far, provided that they fall within the scope of the appended claims.

### Use case examples

Use case examples will now be described for a better understanding of what the invention can bring.

A first use case example relates to a roaming user trying to find the cheapest delivery mechanism. For instance, an enterprise user wants to receive its voice message in a form that is cheaper as he/she is roaming. He has subscribed to UISC service. In this scenario, a voice message is received by the UISC and it is delivered to the terminating roaming user in the form of MMS. This is cheaper than the user calling the voice mail message or answering the phone.

This mode of operation can be achieved with the exemplary implementation below.

### a. UISC

The roaming and other restrictions are checked from the HSS. Based on the user authorization levels, UISC allows the user to write the logic. If certain levels such as user are not allowed roaming, the roaming options would not be available to user.

User creates logic based on service diagram.

### b. PUPC

UISC asks the PUPC to create the IFC for the user.

PUPC would access the user logic database and access whether it is for originating /terminating end.

In this case, it is for terminating end and as user has specified roaming options

PUPC interacts with HSS to determine the domain name of the user and list of roaming domain names.

PUPC creates service logic i.e. if P-Visited-Network-ID!=home domain

Method =INVITE AND

From = SIP : Bob@ft.com OR [From group selected by user in stept]

AND P-Visited-Network-ID != homedomain AND

(Session Case = Terminating)

AS

Voice Mail Server, go to step 2

This logic is created and stored in service logic database.

c. No PUPC, CCC is needed in this scenario

d. DSC

UISC sends control to delivery mechanism and delivery controller checks the database for the delivery mechanism.

The delivery mechanism enhances IFC and

Step2

IF Method =BYE

AS

Delivery Service Controller.

Delivery Controller would save the service logic in service logic database.

UISC completes the service personalization and performs validation of user logic and creation of service logic and triggers in HSS.

For Service Execution stage, Delivery Service Controller would receive the control from the trigger point.

Delivery Controller would check the message from the voice mail server, retrieve it and send it to the MMS Server. There is some intelligence in delivery controller which would retrieve message and forward to MMS Server. The message is then sent to user in the form of voice clip.

For service execution stage, the trigger point gives the control to Delivery Service Controller. The Delivery Service Controller ensures that service is delivered to user or group of users as per service logic created in the service personalization phase.

A second use case example relates to user creating/controlling own services.

In this example, Fredrick, a sales person, requires control over his numerous terminals, Web and IMS applications. When talking to potential clients, he does not want to be disturbed whilst at the same time he wishes to remain connected. Fredrick chooses for both potential/new and existing customers to be transferred to an IVR option of either leaving a voice mail or being redirected to another person in the company, depending on their needs. Using UISC, Fredrick can create the service logic that defines these actions and integrate his applications, terminals and contacts.

A third use case example relates to user creatng/controlling enterprise services.

In this example, Chantal, an office manager, would like to create different service logics for various groups of employees in her company. For this purpose, she creates 3 different groups - Executive, Employees and External Contractor groups- giving different permissions to each group. As Executive group employees need to travel for business purposes abroad she wants that they are contactable at all times by new customers - meaning the call can be routed to their mobile phone, email account, PSTN line at all times. As for the Employees group - calls are routed at their desktop phone or their business mobile phone based on the cheapest option. Finally, for contractors she chooses that they are contactable on their desk phone, home phone (PSTN), or email account. UISC ensures that calls are routed accordingly for each of the groups.

A fourth use case example relates to services using user centric Converged Controller for their users.

In this example, an advertising service wants that the advert be delivered to its customers based on their presence, location and user terminal capabilities. They define the advert which is a video clip to be sent to the users. The advertising service doesn't care how this message would be delivered to the different users and whether it needs to be converted as per the users' terminal capabilities. UISC takes this responsibility of delivering the message to the appropriate device and client. In this context, the controller receives the advert and makes a decision on where and how to deliver the advert. The advert is sent to various users in different forms like mail, MMS, SMS, or voice call, depending on their presence, terminal capabilities and personal preferences.

It will be understood that many other possibilities are offered by the system of the invention.

### Advantage

Some of the benefits that may be brought by the invention are listed below.

The system of the invention as described above allows users and service providers to create, customize and control various services as per their requirements. Not only users can create, customize and control services but they can also associate specific services with a group of contacts or selected contacts. As a result, services are no longer about "what users can do", rather it is more about "what users want to do". This translates to users paying as per their needs rather than paying for operators predefined services.

Thus the invention increases flexibility in providing personalized communication services to users. Also richer services (both originating and terminating) can be offered.

Service creation may take place in real time basis.

In an IMS implementation, as IFC may be pushed to HSS, the same IFC an be applied for group of users. This is in contrast with the prior art, where IFC is pushed to S-CSCF and where logic can thus be created for a single user only. This would result in higher efficiency of network resources and would in turn reduce cost.

In addition, due to the fact that IFC may be pushed to HSS, for UISC it does not matter whether user is registered or not with S-CSCF.

Another advantage of this approach is that service controllers themselves may manage service result and next service invocation without referring to S-CSCF. In this way, controllers can easily interwork with existing network without making changes to S-CSCF. Besides, more evolved services can be created using the alternative routing mechanism mentioned earlier.

In contrast with the prior art that can only invoke prime services and not have control of multiple parts of session, with UISC, different parts of session and services can be controlled by other services. With UISC parts of session can be controlled, and certain services can be invoked. During the execution of service, the UISC can monitor the execution and can receive control if certain triggers are executed. Example is shown when the UISC gets the control after the user leaves message on voice mail server. UISC may have the ability to retrieve and forward the message to the MMS centre.

Only Application Servers in the home domain are generally allowed to access HSS for security reasons. On the other hand, service controllers can access HSS irrespective of whether they are handling AS in home domain or not.

Service controllers are located in operator's home domain whereas ASs could be boated in home or third party domain. By having controllers in home domain, secure information in HSS can be kept confidential. Also, information that is needed for AS is provided by controllers.

Service controllers manage both upwards and downwards i.e. AS and backend intelligence such as service database, service logic database, UISC and HSS. This means that the service controllers can inform the UISC of change/update in AS within their group.

Service controllers can invoke services dynamically when required.

As service controllers only interact with UISC and databases to share information, it is not required to manage peer service controllers.

## Claims

1. A system for providing personalized communication services to users, the system comprising service controllers (11) arranged for handling respective sets of prime services, at least one of said sets including more than one prime service, databases (13) including a user profile database (HSdb) relating to said users, a service database (Sdb) relating to said prime services and a logic database (UL,SL) relating to personalized services, and a service management controller (10) arranged for interacting with said service controllers and said databases, the service management controller being further arranged for:
- selectively allowing, by interacting with at least some of said databases, creation of a personalized service based on at least some of said prime services and defined with respect to a group of at least one user, and
- after having allowed creation of said personalized service, saving in said logic database an indication of an order of the prime services on which said personalized service is based.

2. A system as claimed in claim 1, wherein the service management controller (10) is further arranged for, after having allowed creation of said personalized service, retrieving the order indication from the logic database (SL) and performing said personalized service with respect to at least one user of said group, by sequentially activating the service controllers (13) handling the prime services on which said personalized service is based depending on said order indication.

3. A system as claimed in claim 1 or 2, wherein for selectively allowing creation of the personalized service, the service management controller (10) is arranged for checking at least one of: whether data representing all prime services on which said personalized service is based are stored in the service database (Sdb), whether the use of all prime services on which said personalized service is based is compatible with user profile data relating to said group of at least one user and stored in the user profile database (HSdb), and whether said personalized service is in line with service rules stored in the service database (Sdb).

4. A system as claimed in claim 2 or 3, wherein each of the service controllers (11) handing the prime services on which said personalized service is based is arranged, upon activation by the service management controller, for activating in turn application servers (12) each capable of performing one of the corresponding prime services.

5. A system as claimed in any one of the foregoing claims, wherein one (PUPC,TCC,CC,DSC) of the service controllers (11) is arranged for handling a set of services all relating to at least one of the following: dynamic relations such as user presence or location, terminal capabilities determination, service charging, and service delivery.

6. A system as claimed in any one of the foregoing claims, further comprising a single point of access (15) arranged for avowing the definition of the personalized service based on user preferences and service requirements.

7. A system as claimed in any one of the foregoing claims, the system being arranged for insertion into an IMS network.

8. A system as claimed in claim 7, wherein the service management controller (10) is located in an S-CSCF or between an S-CSCF (14) and said service controllers (11).

9. A system as claimed in claim 7 or 8, wherein the service management controller is further arranged for, after having allowed creation of said personalized service, creating corresponding triggers and pushing said triggers into the HSS user profile database when said personalized service does not require performance by the service management controller (10)

10. A service management controller (10) for use in a system as claimed in any one of the foregoing claims, the service management controller being arranged for:
- interacting with said service controllers and said databases ;
- selectively allowing, by interacting with at least some of said databases, creation of a personalized service based on at least some of said prime services and defined with respect to a group of at least one user, and
- after having allowed creation of said personalized service, saving in said logic database an indication of an order of the prime services on which said personalized service is based.

11. A method for providing personalized communication services to users in a system as claimed in any one of claims 1 to 9, the method comprising the following steps carried out by the service management controller (10) :
- selectively allowing, by interacting with at least some of said databases, creation of a personalized service based on at least some of said prime services and defined with respect to a group of at least one user, and
- after having allowed creation of said personalized service, saving in said logic database an indication of an order of the prime services on which staid personalized service is based.
